# EUROPEAN PATENT SPECIFICATION

(11) **EP 1 486 361 B1**
(45) Date of publication and mention of the grant of the patent: **03.05.2006**
(21) Application number: 03425371.6
(22) Date of filing: 10.06.2003
(51) Int. Cl.: B60H 1/00

(54) **Air distribution assembly for vehicles**
Luftsteuerungssystem für Kraftfahrzeuge
Système de distribution d'air pour véhicules

(43) Date of publication of application: 15.12.2004
(73) Proprietor: DENSO THERMAL SYSTEMS S.p.A., 10046 Poirino (Torino) (IT)
(72) Inventor: Bergamo, Luca, c/o Denso Thermal Systems Spa, 10046 Poirino (Torino) (IT); Carbone, Andrea, c/o Denso Thermal Systems Spa, 10046 Poirino (Torino) (IT); Nalon, Massimo, c/o Denso Thermal Systems Spa, 10046 Poirino (Torino) (IT); Tonelli, Luca, c/o Denso Thermal Systems Spa, 10046 Poirino (Torino) (IT)
(74) Representative: Marchitelli, Mauro

(56) References cited:
- EP-A- 0 125 976
- EP-A- 0 983 884
- DE-A- 19 753 616

## Description

The present invention relates to an air-distribution assembly for motor vehicles according to claim 1.

Air-distribution assemblies of a traditional type comprise a casing defining an air-distribution chamber, which communicates with at least three air-distribution ducts. A first duct distributes a flow of air to the bottom of the front window of the motor vehicle (defrost), a second duct distributes a flow of air to front outlets (vent), and a third duct distributes the flow of air towards the feet of the driver and of the passenger. Air-distribution assemblies of a higher level of quality enable distribution of the air flow in all the possible combinations of the three main ducts. The overall number of combinations requires seven control positions. Generally, this is achieved with electrical actuators for controlling the regulating vanes associated to the air-distribution ducts.

Document EP-A-0983 884 discloses an air distribution motor vehicles according to the preamble of claim 1.

The object of the present invention is to provide an air-distribution assembly which will be able to supply all the possible combinations for distribution of the flow of air between the three main ducts by controlling the regulating vanes, starting from a single control shaft.

According to the present invention, said object is achieved by an air-distribution assembly having the characteristics forming the subject of the main claim.

The present invention will now be described in detail with reference to the attached drawings, which are provided purely by way of non-limiting example and in which:
- Figure 1 is a schematic perspective view of an air-distribution assembly according to the present invention;
- Figure 2 is a schematic cross-sectional view according to the line II-II of Figure 1; and
- Figure 3 is a graph which illustrates the degree of opening of the air-distribution vanes according to the angle of rotation of the main control shaft.

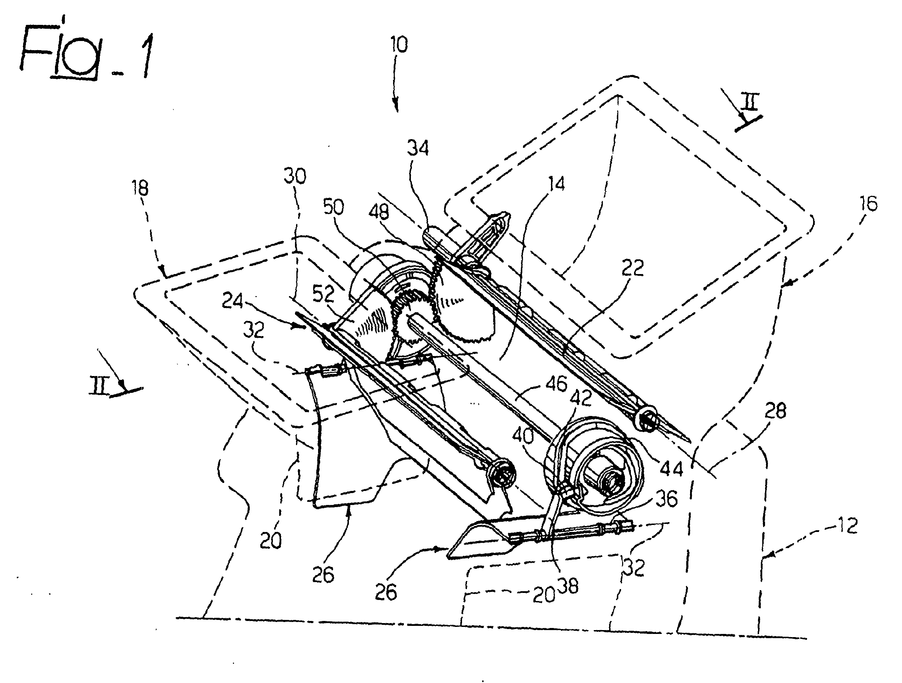

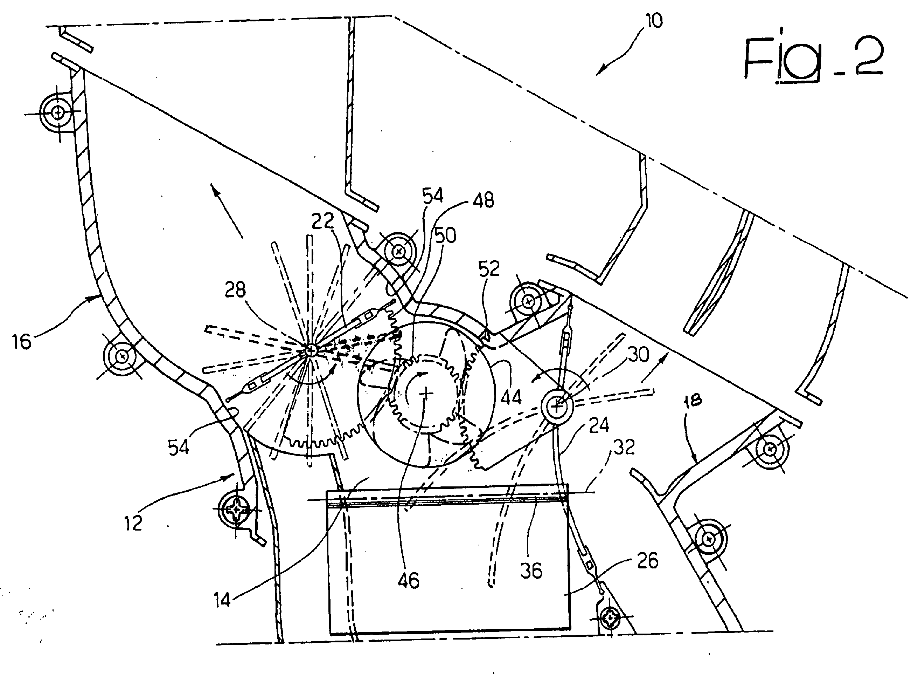

With reference to Figures 1 and 2, the reference number 10 designates, as a whole, an air-distribution assembly for motor vehicles according to the present invention. The air-distribution assembly 10 comprises a casing 12 made of plastic material, the walls of which define an air-distribution chamber 14.

The air-distribution chamber 14 communicates with a series of air-distribution ducts or openings. A first air-distribution duct 16 sends a flow of air towards the front window of the motor vehicle (defrost). A second duct 18 sends a flow of air coming from an air-distribution chamber 14 towards front air-distribution outlets (vent) generally arranged on the front part of the dashboard of a motor vehicle. The air-distribution chamber 14 moreover communicates with a pair of openings 20, through which a flow of air is directed towards the feet of the driver and the feet of the front-seat passenger of the motor vehicle.

The air-distribution assembly 10 comprises a device for regulating the rate of flow of air directed towards the ducts 16, 18 and 20. The said device comprises two vanes of the butterfly type 22, 24 associated respectively to the ducts 16 and 18 and two vanes of the flap type 26, each of which is associated to a respective opening 20. By "vane of the butterfly type" is understood a vane for regulating the rate of flow of air, mounted so as to be able to rotate about an axis passing through the plane of the vane. By "vane of the flap type" is understood a vane for regulating the rate of flow of air, mounted so as to be able to rotate about an axis which extends along a perimetral side of the vane or else outside the body of the vane.

The two vanes of the butterfly type 22, 24 are able to rotate about respective axes 28, 30 parallel to one another. The two vanes of the flap type 26 are articulated to the shell 12 about respective axes 32 parallel to one another and orthogonal to the axes 28, 30.

The regulating vane 22 is controlled in rotation about the axis 28 by a control pin 34 fixed in rotation to the vane 22 and coaxial to the axis 28. The control pin 34 may be connected to a regulating knob or else to the outlet shaft of an electrical rotating actuator.

Each of the two flap-type regulating vanes 26 is fixed to a shaft 36 hinged to the casing 12 about the axis 32. Each shaft 36 is fixed to an actuating arm 38 having at one of its ends a pin 40, which engages a cam 42 formed on the outer surface of a cylindrical body 44. The two cylindrical members 44 for the two regulating vanes 26 are fixed to a shaft 46 carried by the shell 12 so as to be able to rotate about an axis parallel to the axes of rotation 28, 30 of the two butterfly-type vanes 22, 24.

The control pin 34 is connected to the shaft 46 by means of a first gear transmission, which includes a toothed sector 48 fixed to the control pin 34 and a gear wheel 50 fixed to the shaft 46.

The second butterfly-type vane 24 is connected to the shaft 46 by means of a second gear transmission formed by the gear wheel 50 and by a second toothed sector 52 fixed to the vane 24. The toothed elements 48, 50 and 52 mesh with one another and form a kinematic chain, which establishes a pre-set correlation of movement between the angular movements of the vane 22, of the shaft 46, and of the vane 24. The cams 42 moreover establish a pre-set correlation between the angular position of the shaft 46 and the angular position of the flap-type vanes 26.

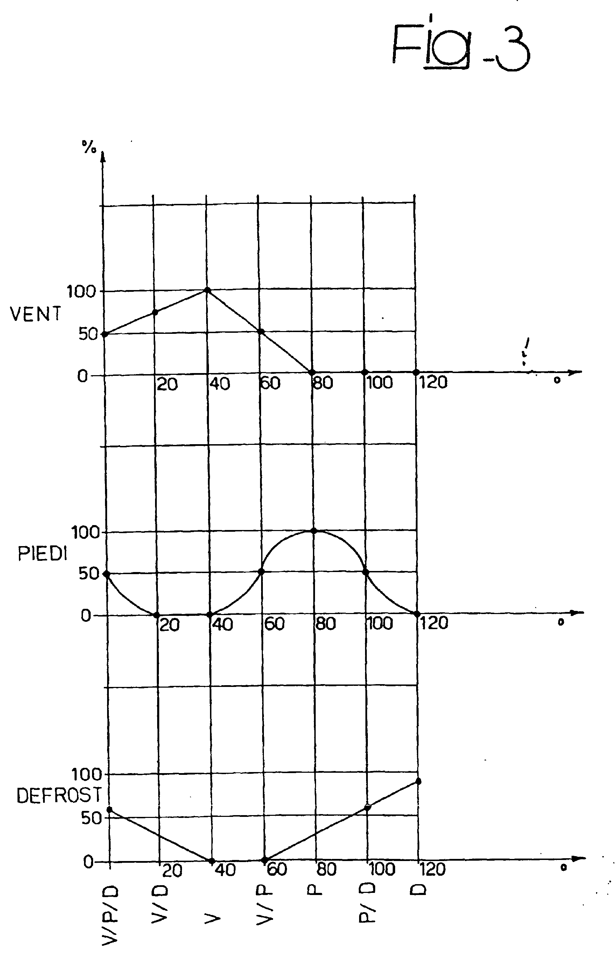

The correlation between the angular positions of the regulating vanes 22, 24 and 26 is illustrated in the graphs of Figure 3. Said graphs present on the abscissa the angular position of the control pin 34 and on the ordinate the percentage degree of opening of the vanes. The graph indicated by VENT relates to the degree of opening of the vane 24, the graph indicated by FEET relates to the degree of opening of each of the two flap-type vanes 26, and the graph indicated by DEFROST relates to the degree of opening of the vane 22.

In the position of 0° of the control pin 34, the vanes 22, 24 and 26 are all 50% open. In this position, the flow of air which traverses the air-distribution chamber 14 is distributed approximately in equal proportions between VENT, FEET, and DEFROST. In the position of 20° of the control pin 34, the vanes 26 are closed, and the flow of air is distributed between VENT and DEFROST. In the position of 40° of the control pin 34, the vane 24 is completely open, whilst the vanes 22 and 26 are completely closed; consequently, the entire flow of air is directed towards VENT.

During rotation of the control pin 34 between the positions 40° and 60°, the vane 22 rotates in a blind sector obtained with the walls of the box 16. As illustrated in Figure 2, arched surfaces 54 are provided with an angular extension of approximately 20°, which co-operate with the ends of the vane 22 for defining an area of closing extending through the angular sector comprised between the positions of 40° and 60° of the control pin 34. Consequently, the vane 22 remains closed in this range of rotation of the control pin 34.

In the position of 60° of the control pin 34, the flow is distributed between VENT and FEET. In the position of 80°, the vanes 26 are completely open, the vane 24 is completely closed, and the vane 22 is open with a small angle of opening (approximately 25%). In this position, the majority of the flow is directed towards the feet.

In the position of 80° of the control pin 34, the toothed sector 52 disengages from the gear wheel 50, consequently the vane 24 remains closed for the positions of the control pin 34 comprised between 80° and 120°.

In the position of 100° of the control pin 34, the flow of air is distributed between FEET and DEFROST, whilst in the position of 120° the entire flow of air is directed towards DEFROST.

As may be noted, the air-distribution assembly according to present invention enables seven positions to be obtained, starting from a single control pin 34. The solution according to the present invention thus enables a considerable reduction in the number of components to be obtained as compared to currently known solutions, which enable seven positions of air-flow distribution to be obtained. Consequently, the solution according to invention involves a reduction in the costs of components and in the cost of assembly. Furthermore, there is a reduction in the number of factors which determine the final tolerance of the assembly.

## Claims

1. An air-distribution assembly for motor vehicles, comprising:
- a casing (12) defining an air-distribution chamber (14);
- a plurality of air-distribution ducts/openings (16, 18, 20), which communicate with the air-distribution chamber (14);
- a plurality of regulating vanes (22, 24, 26) associated to said air-distribution ducts/openings (16, 18, 20); and
- a control device for controlling said regulating vanes (22, 24, 26) comprising:
- a rotating pin (34) fixed in rotation to a first vane (22) ;
- a rotating shaft (46) which controls a second regulating vane (26);
- a first gear transmission (48, 50) between the pin (34) and the rotating shaft (46); and
- a third regulating vane (24) connected to the pin (34) by means of a second gear transmission (50, 52) **characterised in that** the rotating pin is a control pin (34) and the rotating shaft (46) is fixed in rotation to at least one cylindrical cam (44, 42).

2. The air-distribution assembly according to Claim 1, **characterized in that** the first vane (22) and the third vane (24) are able to rotate with respect to the casing (12) about respective axes (28, 30) parallel to one another.

3. The air-distribution assembly according to Claim 2, **characterized in that** the shaft (46) is able to rotate about an axis parallel to the axes of rotation (28, 30) of the first vane (22) and of the third vane (24).

4. The air-distribution assembly according to Claim 3, **characterized in that** the rotating shaft (46) carries at its ends two drum cams (42, 44) which control two vanes (26) oscillating with respect to the casing (12) about respective axes (32) orthogonal to the axes of rotation (28, 30) of the first vane (22) and the third vane (24).

5. The air-distribution assembly according to Claim 4, **characterized in that** each of said drum cams (42, 44) comprises a cylindrical body (44) fixed to the rotating shaft (46) and provided on its outer surface with a groove having the profile of a cam (42), engaged by a pin (40) carried by an actuating arm (38) fixed to the respective second vane (26).

6. The air-distribution assembly according to Claim 1, **characterized in that** the control device is designed to control seven different combinations of air-flow output according to different angular positions of the rotating control pin (34).

## Patentansprüche

1. Luftverteilungssystem für Kraftfahrzeuge, umfassend:
- ein Gehäuse (12), das eine Luftverteüerkammer (14) abgrenzt;
- eine Vielzahl von Luftverteilerleitungen/Öffnungen (16, 18, 20), die mit der Luftverteilerkammer (14) in Verbindung stehen;
- eine Vielzahl von Stellflügeln (22, 24, 26), die den Luftverteilerleitungen/Öffnungen (16, 18, 20) zugeordnet sind; und
- eine Steuervorrichtung zum Steuern der Stellflügel (22, 24, 26), umfassend:
- einen Drehstift (34), der drehfest an einem ersten Flügel (22) befestigt ist;
- eine Schwenkwelle (46), die einen zweiten Stellflügel (26) steuert;
- ein erstes Zahnradvorgelege (48, 50) zwischen dem Stift (34) und der Schwenkwelle (46); und
- einen dritten Stellflügel (24), der mittels eines zweiten Zahnradvorgeleges (50, 52) mit dem Stift (34) verbunden ist;
**dadurch gekennzeichnet, dass**
der Drehstift ein Steuerstift (34) ist und die Schwenkwelle (46) drehfest an wenigstens einem zylindrischen Nocken (44, 42) befestigt ist.

2. Luftverteilungssystem gemäß Anspruch 1, **dadurch gekennzeichnet, dass** der erste Flügel (22) und der dritte Flügel (24) imstande sind, bezüglich des Gehäuses (12) um jeweilige Achsen (28, 30) parallel zueinander zu rotieren.

3. Luftverteilungssystem gemäß Anspruch 2, **dadurch gekennzeichnet, dass** die Welle (46) imstande ist, um eine Achse parallel zu den Schwenkachsen (28, 30) des ersten Flügels (22) und des dritten Flügels (24) zu rotieren.

4. Luftverteilungssystem gemäß Anspruch 3, **dadurch gekennzeichnet, dass** die Schwenkwelle (46) an ihren Enden zwei Steuertrommeln (42, 44) trägt, die zwei Flügel (26) steuern, die bezüglich des Gehäuses (12) um jeweilige Achsen (32) orthogonal zu den Schwenkachsen (28, 30) des ersten Flügels (22) und des dritten Flügels (24) pendeln.

5. Luftverteilungssystem gemäß Anspruch 4, **dadurch gekennzeichnet, dass** jede der Steuertrommeln (42, 44) einen zylindrischen Körper (44) umfasst, der an der Schwenkwelle (46) befestigt und an seiner Außenfläche mit einer Nut versehen ist, die das Profil eines Nockens (42) aufweist, in den ein Sperrstift (40) eingreift, der von einem Angriffschenkel (38) mitgeführt wird, der an dem jeweiligen zweiten Flügel (26) befestigt ist.

6. Luftverteilungssystem gemäß Anspruch 1, **dadurch gekennzeichnet, dass** die Steuervorrichtung zur Steuerung von sieben unterschiedlichen Luftstromausstoß-Kombinationen gemäß unterschiedlichen Winkelstellungen des Drehsteuerstiftes (34) ausgelegt ist.

## Revendications

1. Ensemble de distribution d'air pour des véhicules à moteur, comportant :
- un boîtier (12) définissant une chambre de distribution d'air (14);
- une multiplicité de conduits/ouvertures de distribution d'air (16, 18, 20), qui communiquent avec la chambre de distribution d'air (14);
- une multiplicité de volets de régulation (22, 24, 26) associés aux dits conduits/ouvertures de distribution d'air (16, 18, 20); et
- un dispositif de commande destiné à commander lesdits volets de régulation (22, 24, 26) comportant :
- un axe rotatif (34) fixé en rotation sur un premier volet du type papillon (22);
- un arbre rotatif (46) qui commande un deuxième volet de régulation (26);
- une première transmission à engrenage (48, 50) entre l'axe (34) et l'arbre rotatif (46) ; et
- un troisième volet de régulation (24) relié à l'axe (34) au moyen d'une deuxième transmission à engrenage (50, 52),
**caractérisé en ce que** l'axe rotatif est un axe de commande (34) et l'arbre rotatif (46) est fixé en rotation sur au moins une came cylindrique (44, 42).

2. Ensemble de distribution d'air selon la revendication 1, **caractérisé en ce que** le premier volet (22) et le troisième volet (24) peuvent tourner par rapport au boîtier (12) autour d'axes respectifs (28, 30) parallèles l'un à l'autre.

3. Ensemble de distribution d'air selon la revendication 2, **caractérisé en ce que** l'arbre (46) peut tourner autour d'un axe parallèle aux axes de rotation (28, 30) du premier volet (22) et du troisième volet (24).

4. Ensemble de distribution d'air selon la revendication 3, **caractérisé en ce que** l'arbre rotatif (46) porte à ses extrémités deux cames à tambour (42, 44) qui commandent deux volets (26) qui oscillent par rapport au boîtier (12) autour d'axes respectifs (32) perpendiculaires aux axes de rotation (28, 30) du premier volet (22) et du troisième volet (24).

5. Ensemble de distribution d'air selon la revendication 4, **caractérisé en ce que** chacune desdites cames à tambour (42, 44) comporte un corps cylindrique (44) fixé sur l'arbre rotatif (46) et pourvu sur sa surface extérieure d'une rainure ayant le profil d'une came (42), engagée par un axe (40) porté par un bras d'actionnement (38) fixé sur le deuxième volet respectif (26).

6. Ensemble de distribution d'air selon la revendication 1, **caractérisé en ce que** le dispositif de commande est conçu pour commander sept combinaisons différentes de sorties d'écoulement d'air en fonction des différentes positions angulaires de l'axe de commande (34).
